# EUROPEAN PATENT APPLICATION

(11) **EP 4 642 133 A1**
(43) Date of publication of application: **29.10.2025**
(21) Application number: 24744835.0
(22) Date of filing: 15.01.2024
(51) Int. Cl.: H04W 72/21, H04W 76/27, H04W 64/00, H04W 52/02

(54) **METHOD AND DEVICE FOR CONFIGURING SOUNDING REFERENCE SIGNAL TRANSMISSION FOR ESTIMATING LOCATION OF INACTIVE TERMINAL IN NEXT GENERATION MOBILE COMMUNICATION SYSTEM**

(30) Priority: 19.01.2023 KR 20230007841
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); AGIWAL, Anil, Suwon-si, Gyeonggi-do 16677 (KR); JUNG, Sangyeob, Suwon-si, Gyeonggi-do 16677 (KR); HWANG, June, Suwon-si, Gyeonggi-do 16677 (KR)
(74) Representative: Gulde & Partner
(86) International application number: PCT/KR2024/000724
(87) International publication number: WO 2024/155055

(57) **Abstract**

Disclosed are a method and device for configuring sounding reference signal transmission for estimating the location of an inactive terminal in a next generation mobile communication system. A method performed by a terminal in a wireless communication system may comprise the steps of: receiving, from a first base station supporting a first cell, a radio resource control (RRC) release message including sounding reference signal (SRS) transmission configuration information to be used in an RRC inactive state and a list of cells included in a validity area of the SRS transmission configuration information; in the RRC inactive state of the terminal that is based on the RRC release message, determining whether a second cell is included in the list of cells included in the validity area of the SRS transmission configuration information; and if the second cell is included in the list of cells included in the validity area of the SRS configuration information, transmitting an SRS to the second cell on the basis of the SRS configuration information.

## Description

### [Technical Field]

The disclosure relates to an operation of a terminal and a base station in a next-generation mobile communication system. More specifically, the disclosure relates to a method and device for providing a location estimation service in an inactive terminal in a next generation mobile communication system.

### [Background Art]

5G mobile communication technology defines a wide frequency band to enable a fast transmission speed and new services, and can be implemented not only in a sub-6GHz frequency band such as 3.5 gigahertz (3.5GHz), but also in an ultra-high frequency band ('above 6GHz') called millimeter wave (mmWave) such as 28GHz and 39GHz. In addition, in the case of 6G mobile communication technology, which is called systems beyond 5G communication, implementation in a terahertz band (e.g., 95GHz to 3THz band) is being considered to achieve a transmission rate that is 50 times faster than the 5G mobile communication technology and an ultra low latency time that is reduced to 1/10.

In the early stages of the 5G mobile communication technology, with the goal of ensuring service support and performance requirements for enhanced mobile broadband (eMBB), ultra-reliable low-latency communications (URLLC), and massive machine-type communications (mMTC), standardization has been made for beamforming and massive MIMO for mitigating a path loss of radio waves in a ultra-high frequency band and increase a transmission distance of the radio waves, support for various numerologies for efficient utilization of ultra-high frequency resources (operation of multiple subcarrier intervals, etc.) and dynamic operation of slot formats, initial access technology for supporting multibeam transmission and broadband, definition and operation of a band-wide part (BWP), new channel coding methods, such as a low density parity check (LDPC) code for large-scale data transmission and a polar code for high reliable transmission of control information, L2 pre-processing, network slicing providing a dedicated network specialized for a specific service, etc.

Currently, discussions are underway for improvement and performance enhancement of the initial 5G mobile communication technology in consideration of services that the 5G mobile communication technology is intended to support, and physical layer standardization is in progress for technologies such as vehicle-to-everything (V2X) to help autonomous vehicles determine their driving based on their own locations and status information that the autonomous vehicles transmit and to increase user convenience, new radio unlicensed (NR-U) for system operation that meets various regulatory requirements in an unlicensed band, NR UE low power consumption technology (UE power saving), a non-terrestrial network (NTN) that is UE-satellite direct communication to secure coverage in areas where communication with a terrestrial network is impossible, and positioning.

In addition, standardization of wireless interface architecture/protocol fields is in progress for technologies such as industrial Internet of Things (IIoT) for supporting new services through linkage and convergence with other industries, integrated access and backhaul (IAB) that integrates and supports wireless backhaul links and access links to provide nodes for expanding network service areas, mobility enhancement including conditional handover and dual active protocol stack (DAPS) handover, and 2-step RACH for NR that simplifies random access procedures, and standardization of system architecture/service fields is also in progress for 5G baseline architecture (e.g., service based architecture, and service based interface) for combining network functions virtualization (NFV), software-defined networking (SDN) technology, mobile edge computing (MEC) that receives services based on a location of UE, etc.

When such 5G mobile communication systems are commercialized, an explosive increase in connected devices will be connected to a communication network, so it is expected that enhanced functionality and performance of the 5G mobile communication systems and the integrated operation of the connected devices will be required. To this end, new research is expected to be conducted on eXtended reality (XR) to efficiently support augmented reality (AR), virtual reality (VR), and mixed reality (MR), etc., improvement in 5G performance and reduction in complexity using artificial intelligence (AI) and machine learning (ML), AI service support, metaverse service support, drone communications, etc.

In addition, the development of these 5G wireless systems may serve as a basis for the development of not only multi-antenna transmission technology such as new waveform, full dimensional MIMO (FD-MIMO), array antenna, and large scale antenna to ensure coverage in the terahertz band of 6G mobile communication technology, high-dimensional spatial multiplexing technology using metamaterial-based lenses and antennas and orbital angular momentum (OAM) to improve the coverage of terahertz band signals, and reconfigurable intelligent surface (RIS) technology, but also full duplex technology for enhancing frequency efficiency and improving a system network of 6G mobile communication technology, AI-based communication technology that utilizes satellite and artificial intelligence (AI) from the design stage and incorporates end-to-end AI support functions to realize system optimization, and next generation distributed computing technology that realizes services with complexity that exceeds the limits of UE computing capabilities by utilizing ultra-high-performance communication and computing resources, etc.

Meanwhile, in the 5G system described above, discussions are underway for a method for performing SRS transmission for measuring a location of a UE in order to implement a more efficient communication system.

### [Disclosure of Invention]

### [Technical Problem]

The present disclosure is directed to providing a method for efficiently configuring a sounding reference signal (SRS).

More specifically, the present disclosure is directed to providing a method and device for efficiently configuring sounding reference signal transmission of a terminal when estimating a location of an inactive terminal in a mobile communication system.

### [Solution to Problem]

According to an aspect of the present disclosure, a method performed by a terminal in a wireless communication system includes: receiving, from a first base station supporting a first cell, a radio resource control (RRC) release message including sounding reference signal (SRS) transmission configuration information to be used in an RRC inactive state and a list of cells included in a validity area of the SRS transmission configuration information; in the RRC inactive state of the terminal that is based on the RRC release message, determining whether a second cell is included in the list of cells included in the validity area of the SRS transmission configuration information; and when the second cell is included in the list of cells included in the validity area of the SRS transmission configuration information, transmitting an SRS to the second cell based on the SRS transmission configuration information.

According to another aspect of the present disclosure, a method performed by a first base station supporting a first cell in a wireless communication system includes: generating, for a terminal, a radio resource control (RRC) release message including sounding reference signal (SRS) transmission configuration information to be used in an RRC inactive state and a list of cells included in a validity area of the SRS transmission configuration information; and transmitting an RRC release message including the SRS transmission configuration information to be used in the RRC inactive state and a list of cells included in a validity area of the SRS transmission configuration information, in which, when a second cell is included in the list of cells included in the validity area of the SRS transmission configuration information, SRS transmission configuration to the second cell in the RRC inactive state based on the RRC release message is based on the SRS transmission configuration information.

According to still another aspect of the present disclosure, a terminal in a wireless communication system includes: a transceiver transmitting and receiving a signal; and a controller, in which the controller receives, from a first base station supporting a first cell, a radio resource control (RRC) release message including sounding reference signal (SRS) transmission configuration information to be used in an RRC inactive state and a list of cells included in a validity area of the SRS transmission configuration information, in the RRC inactive state of the terminal that is based on the RRC release message, determines whether a second cell is included in the list of cells included in the validity area of the SRS transmission configuration information, and when the second cell is included in the list of cells included in the validity area of the SRS transmission configuration information, transmits an SRS to the second cell based on the SRS transmission configuration information.

According to yet another aspect of the present disclosure, a first base station supporting a first cell in a wireless communication system includes: a transceiver transmitting and receiving a signal; and a controller, in which the controller generates, for a terminal, a radio resource control (RRC) release message including sounding reference signal (SRS) transmission configuration information to be used in an RRC inactive state and a list of cells included in a validity area of the SRS transmission configuration information, and transmits an RRC release message including the SRS transmission configuration information to be used in the RRC inactive state and the list of cells included in the validity area of the SRS transmission configuration information, and when a second cell is included in the list of cells included in the validity area of the SRS transmission configuration information, SRS transmission configuration to the second cell in the RRC inactive state based on the RRC release message is based on the SRS transmission configuration information.

### [Advantageous Effects of Invention]

According to an embodiment of the present disclosure, it is possible to reduce power consumption of a terminal for estimating a location of an inactive terminal.

Effects which can be achieved by the present disclosure are not limited to the above-described effects. That is, other effects that are not described may be obviously understood by those skilled in the art to which the present disclosure pertains from the following description.

### [Brief Description of Drawings]

The above and other objects, features, and advantages of the present disclosure will be more clearly described through the following description of embodiments of the present disclosure with reference to the attached drawings.
FIG. 1A is a diagram illustrating a structure of a next generation mobile communication system according to an embodiment of the present disclosure.
FIG. 1B is a diagram illustrating a network structure according to an embodiment of the present disclosure.
FIG. 1C is a diagram illustrating a process of configuring sounding reference signal (SRS) resources of a UE according to an embodiment of the present disclosure.
FIG. 1D is a diagram illustrating a process of releasing an SRS transmission configuration when the UE is moved to other cell areas according to an embodiment of the present disclosure.
FIG. 1E is a diagram illustrating a process of maintaining an SRS transmission configuration even if a UE is moved to other cell areas according to an embodiment of the present disclosure.
FIG. 1F is a diagram illustrating a procedure for the UE to maintain SRS transmission in an RRC inactive state according to an embodiment of the present disclosure.
FIG. 1G is a diagram illustrating a procedure for the UE to update a TA value used for the SRS transmission in the RRC inactive state according to an embodiment of the present disclosure.
FIG. 1H is a flowchart illustrating an operation when the UE receives SRS transmission configuration information in the RRC inactive state according to an embodiment of the present disclosure.
FIG. 2 is a block diagram illustrating an internal structure of the terminal according to an embodiment of the present disclosure.
FIG. 3 is a block diagram illustrating a structure of a base station according to an embodiment of the present disclosure.

### [Mode for the Invention]

Hereinafter, operation principles of the present disclosure will be described in detail with reference to the accompanying drawings. When it is determined that the detailed description of the known functions or configurations in describing the present disclosure below may obscure the gist of the present disclosure, the detailed description thereof will be omitted. Further, the following terms are defined in consideration of the functions in the present disclosure and may vary depending on the intention of users and operators, practice, etc. Therefore, the definitions thereof should be construed based on the contents throughout the specification. Hereinafter, embodiments of the present disclosure will be described with reference to the accompanying drawings.

For the same reason, some components in the accompanying drawings are exaggerated, omitted, or schematically illustrated. In addition, the size of each component does not entirely reflect the actual size. The same reference numerals are assigned to the same or corresponding components in each drawing.

Advantages and features of the present disclosure and methods accomplishing the same will become apparent from the following detailed description of example embodiments with reference to the accompanying drawings. However, the present disclosure is not limited to exemplary embodiments to be described below, but may be implemented in various different forms, the present embodiments will be provided only in order to make the present disclosure complete and allow those skilled in the art to completely recognize the scope of the present disclosure, and the present disclosure will be defined by the scope of the claims.

In this case, it will be appreciated that each block of a processing flowchart and combinations of the flowcharts may be executed by computer program instructions. Since these computer program instructions may be mounted in a processor of a general computer, a special computer, or other programmable data processing apparatuses, these computer program instructions executed through the processor of the computer or the other programmable data processing apparatuses create means performing functions described in a block(s) of the flowchart. Since these computer program instructions may also be stored in a computer usable or computer readable memory that may be directed to a computer or other programmable data processing apparatuses in order to implement the functions in a specific scheme, the computer program instructions stored in the computer usable or computer readable memory can also produce manufacturing articles including instruction means performing the functions described in the block(s) of the flowchart. Since the computer program instructions may be installed on a computer or other programmable data processing apparatus, a series of operational steps may be performed on the computer or other programmable data processing apparatus to produce a computer-executable process, so that the instructions executing the computer or other programmable data processing apparatus may also provide steps for executing the functions described in the block(s) of the flowchart.

In addition, each block may indicate some of modules, segments, or codes including one or more executable instructions for executing a specific logical function(s). Further, it is to be noted that functions mentioned in the blocks occur regardless of an order in some alternative example embodiments. For example, two blocks that are continuously illustrated may be simultaneously performed in fact or be performed in a reverse order depending on corresponding functions.

In this case, the term '~unit' used in the present embodiment refers to software or a hardware component such as a field programmable gate array (FPGA) or an application specific integrated circuit (ASIC), and '~unit' play certain roles. However, '~unit' is not limited to the software or the hardware. The '~unit' may be configured to be stored in a storage medium that may be addressed or may be configured to reproduce one or more processors. Accordingly, as an example, the '~unit' refers to components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit.' In addition, components and '~units' may be implemented to reproduce one or more central processing units (CPUs) in a device or a security multimedia card. In addition, in embodiments, the '~unit' may include one or more processors.

When it is determined that the detailed description of the related known functions or configurations in describing the present disclosure below may obscure the gist of the present disclosure, the detailed description thereof will be omitted. Hereinafter, embodiments of the present disclosure will be described with reference to the accompanying drawings.

In the following description, terms for identifying connection nodes, terms referring to network entities, terms referring to messages, terms referring to interfaces between network entities, terms referring to various types of identification information, etc., are provided for the convenience of description. Accordingly, the present disclosure is not limited to terms described below, and other terms referring to objects having equivalent technical meanings may be used.

Hereinafter, for convenience of description, the present disclosure uses terms and names defined in the 3rd generation partnership project long term evolution (3GPP LTE) standards. However, the present disclosure is not limited to the above terms and names, and may be equally applied to systems that follow other standards. In the present disclosure, eNB may be used interchangeably with gNB for convenience of description. That is, a base station described as eNB may represent gNB.

Hereinafter, a base station is an entity that performs resource allocation of a terminal, and may be at least one of a gNode B, an eNode B, a Node B, a base station (BS), a wireless access unit, a base station controller, or a node on a network. The terminal may include user equipment (UE), a mobile station (MS), a cellular phone, a smartphone, a computer, or a multimedia system capable of performing a communication function. Of course, the present disclosure is not limited to the above examples.

In addition, although embodiments of the present disclosure are described below as examples of LTE, LTE-A, LTE Pro, or 5G (or NR, next generation mobile communication) systems, the embodiments of the present disclosure may be applied to other communication systems having similar technical backgrounds or channel forms. In addition, the embodiments of the present disclosure may be applied to other communication systems through some modifications without significantly departing from the scope of the present disclosure as determined by a person having skilled technical knowledge.

When it is determined that the detailed description of the related known functions or configurations in describing the present disclosure below may obscure the gist of the present disclosure, the detailed description thereof will be omitted. Hereinafter, embodiments of the present disclosure will be described with reference to the accompanying drawings.

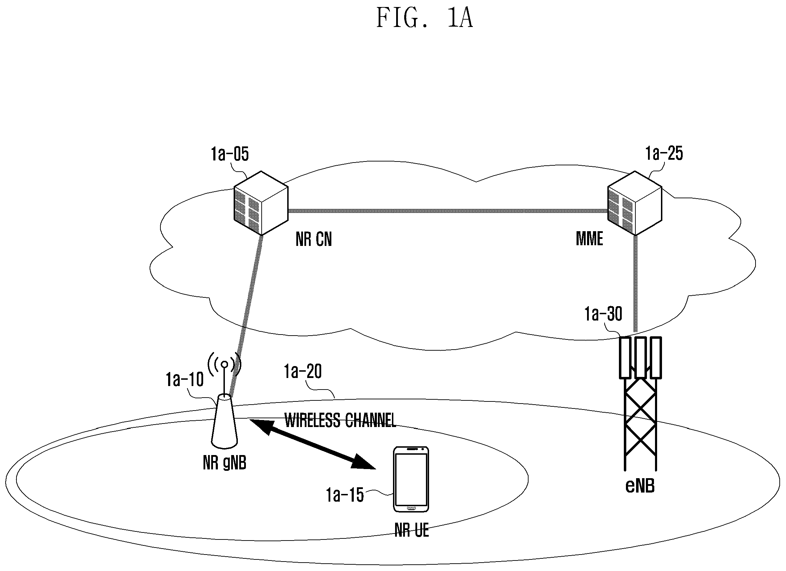

FIG. 1A is a diagram illustrating a structure of a next generation mobile communication system according to an embodiment of the present disclosure.

Referring to FIG. 1A, as illustrated, a radio access network of a next generation mobile communication system (hereinafter, NR or 2G) may include a next generation base station (new radio node B, hereinafter NR NB, gNB, NR gNB, or NR base station) 1a-10 and a new radio core network (NR CN) la-05. Of course, the present disclosure is not limited to the above example, and the radio access network of the next generation mobile communication system may include more entities. A user terminal (new radio user equipment, hereinafter NR UE or UE) 1a-15 may access an external network through the NR gNB 1a-10 and the NR CN 1a-05.

In FIG. 1A, the NR gNB 1a-10 corresponds to an evolved node B (eNB) of the legacy LTE system. The NR gNB 1a-10 is connected to the NR UE 1a-15 via a wireless channel 1a-20 and may provide superior services compared to the legacy Node B. In the next generation mobile communication system, since all user traffic is provided through a shared channel, a device that collects status information such as a buffer status, an available transmission power status, and a channel status of UEs and performs scheduling is required, which may be handled by the NR NB 1a-10. One NR gNB 1a-10 may control a plurality of cells.

According to an embodiment of the present disclosure, in order to implement ultra-high-speed data transmission compared to the LTE system, the next generation mobile communication system may have a bandwidth greater than or equal to the existing maximum bandwidth, and provide an additional beamforming technology using orthogonal frequency division multiplexing (hereinafter, referred to as OFDM) as the radio access technology. In addition, the next generation mobile communication system may use adaptive modulation & coding (hereinafter, referred to as AMC) scheme that determines a modulation scheme and a channel coding rate according to the channel status of the UE. The NR CN 1a-05 may perform functions such as mobility support, bearer configuration, and QoS configuration. The NR CN 1a-05 is a device that is in charge of various control functions as well as mobility management functions for the UE, and may be connected to multiple base stations. In addition, the next generation mobile communication system may be linked to the legacy LTE system, and the NR CN 1a-05 may be connected to an MME 1a-25 through a network interface. The MME may be connected to an eNB 1a-30 that is the existing base station.

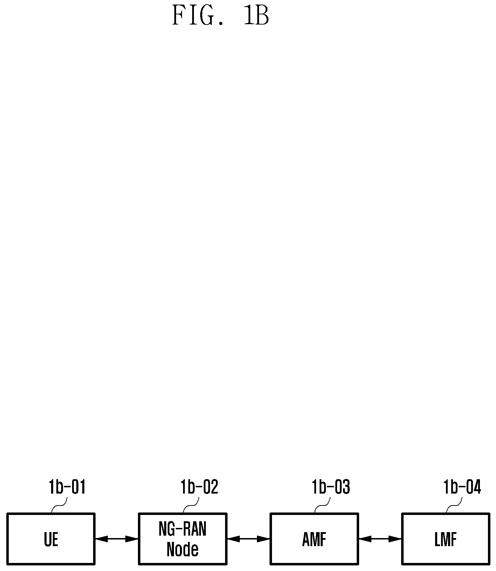

FIG. 1B is a diagram illustrating a network structure according to an embodiment of the present disclosure.

Specifically, FIG. 1B is a diagram illustrating a network structure for providing a UE location estimation service in a next generation mobile communication system according to an embodiment of the present disclosure. The UE location estimation service (LoCation Services) may be used interchangeably with the term LCS below.

Referring to FIG. 1B a network for providing LCS in a next generation mobile communication system may be composed of a UE 1b-01, a base station (NG-RAN node) 1b-02, an access and mobility function (AMF) 1b-03, and a location management function (LMF) 1b-04. In this case, the UE 1b-01 may communicate with the LMF 1b-04 through the NG-RAN node 1b-02 and the AMF 1b-03, and exchange information necessary for estimating the location of the UE. The role of each component for providing LCS is as follows.

The UE 1b-01 may measure a wireless signal necessary for estimating the location of the UE and transfer the measurement result to the LMF 1b-04.

The NR-RAN node 1b-02 may transmit a downlink wireless signal necessary for estimating the location of the UE and measure an uplink wireless signal transmitted by a target terminal.

After receiving an LCS request message from an LCS requester, the AMF 1b-03 may transfer an LCS request message to the LMF 1b-04 to request (or instruct) provision of a location provision service of a UE. When the LMF 1b-04 processes the LCS (or location estimation) request, and then transmits (or responds to) a response message regarding the location estimation result of the UE to the AMF 1b-03, the AMF 1b-03 that receives the response message (or response) may transfer the location estimation result of the corresponding UE to the LCS requester.

The LMF 1b-04 may include a device that receives and processes the LCS request from the AMF 1b-03, and control the overall process necessary for estimating the location of the UE. In order to estimate the location of the UE, the LMF 1b-04 may provide the UE 1b-01 with auxiliary information necessary for location estimation and signal measurement and acquire (receive) the result value. In this case, an LTE positioning protocol (LPP) may be used as a protocol for data exchange. The LPP may define message specifications used between the UE 1b-01 and the LMF 1b-04 for the location estimation service. In addition, the LMF 1b-04 may exchange downlink reference signal (positioning reference signal, hereinafter referred to as PRS) configuration information and uplink reference signal (sounding reference signal, hereinafter referred to as SRS) measurement results to be used for location estimation with the NG-RAN node 1b-02. In this case, an NR positioning protocol A (NRPPa) may be used as a protocol for data exchange, and the NRPPa may define the message specifications used between the NG-RAN node 1b-02 and the LMF 1b-04.

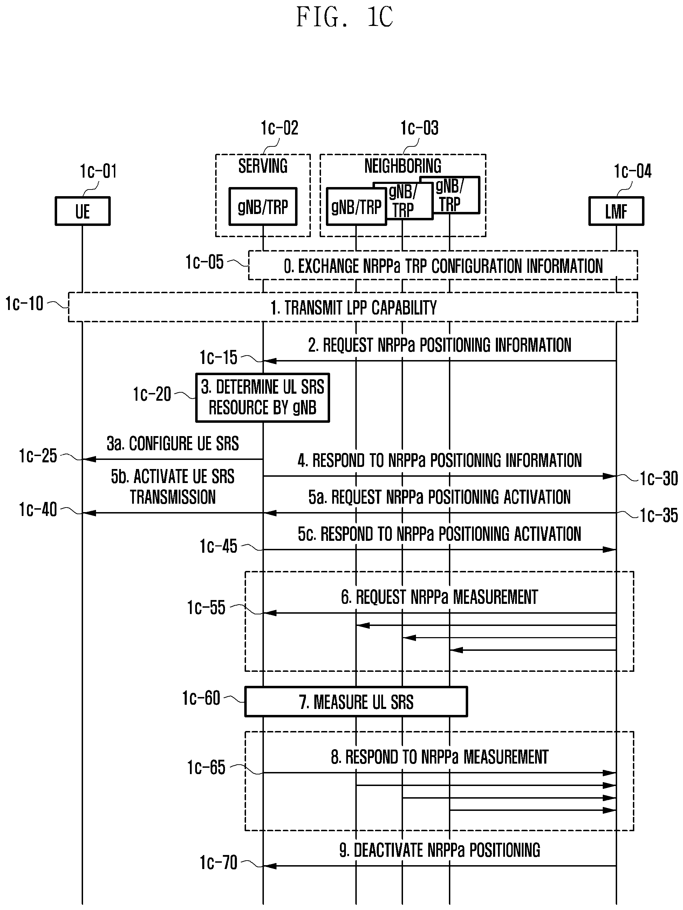

FIG. 1C is a diagram illustrating a process of configuring sounding reference signal (SRS) resources of a UE according to an embodiment of the present disclosure.

More specifically, FIG. 1C is a diagram illustrating a process in which a location management function (LMF) 1c-04 configures a sounding reference signal (SRS) transmission necessary for a UE 1c-01 to perform at least one operation among UL or DL+UL positioning methods.

The UL positioning method may refer to a method for estimating a location of a UE based on an uplink signal transmitted by the UE. For example, the UL positioning method may include a method in which a UE transmits an SRS signal through an uplink, and a gNB/transmission reception point (TRP) that receives (or measures) the SRS signal transmitted by the UE estimates a location of the UE based on the acquired SRS measurement information (or measured result value).

The DL+UL positioning method may refer to a method for estimating a location of a UE based on a downlink signal transmitted by a gNB/TRP and an uplink signal transmitted by the UE. For example, the gNB/TRP may transmit a positioning reference signal (PRS) through the downlink.

The UE that receives the PRS transmitted by the gNB/TRP may acquire the PRS measurement information (or the measured result value). The UE transmits the SRS signal through the uplink, and the gNB/TRP that receives (or measures) the SRS signal transmitted by the UE may acquire the SRS measurement information (or the measured result value).

Thereafter, the PRS measurement information (or the measured result value) measured by the UE and the SRS measurement information (or the measured result value) measured by the gNB/TRP may be used together to estimate the location of the corresponding UE.

Therefore, in order to estimate the location of the UE using at least one of the UL positioning method or the UL+DL positioning method, a procedure in which the UE is configured to transmit the SRS needs to be performed. Hereinafter, the procedure performed at each step will be described below.

In step 1c-05, the LMF 1c-04 may exchange NRPPa TRP configuration information with the serving gNB/TRP 1c-02 and the neighboring gNB/TRP 1c-03. (NRPPa TRP configuration information exchange)

The LMF 1c-04 may acquire information necessary for performing the UL positioning method from the serving gNB/TRP 1c-02 and the neighboring gNB/TRP 1c-03. The information necessary for performing the UL positioning method may include at least one of NR cell information, PRS configuration, spatial direction information, or location information.

**In** step 1c-10, the UE capability information may be exchanged between the LMP 1c-04 and the UE 1c-01. (LPP capability transfer)

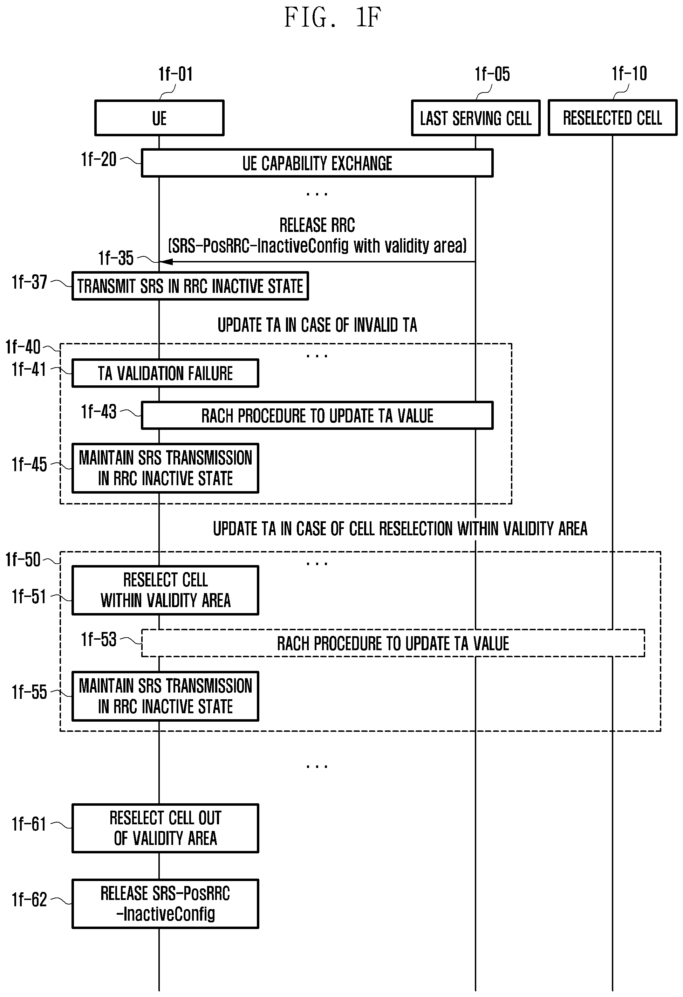

The LMF 1c-04 may request UE capability information related to the location estimation from the UE 1c-02 and receive a response, and specific contents thereof are described with reference to FIG. 1F below.

**In** step 1c-15, the LMF 1c-04 may transmit an NRPPa positioning information request message to the serving gNB/TRP 1c-02. (NRPPa positioning information request)

The NRPPa positioning information request message transmitted by the LMF 1c-04 may include information for determining an SRS transmission resource configuration of the UE necessary for UL positioning based on information (e.g., location information of adjacent TRPs, legacy location information of the UE, SSB/PRS transmission information of the TRPs, etc.) previously collected by the LMF and requesting the determined SRS transmission resource configuration from the serving gNB/TRP 1c-02. The message may include at least one piece of information among the number of required SRS resources, periodicity, pathloss reference, and spatial relation.

In step 1c-20, the serving gNB/TRP 1c-02 may finally determine the SRS resource for the UE to transmit the SRS. (gNB determines UL SRS resources)

After receiving the NRPPa positioning information request message from the LMF 1c-04, the serving gNB/TRP 1c-02 may finally determine the SRS resources to be configured for the UE based on the received message.

In step 1c-25, the serving gNB/TRP 1c-02 may transfer the SRS resource configuration information (or SRS resource transmission configuration information, UE SRS configuration) determined in step 1c-20 to the UE 1c-01. (UE SRS configuration)

The serving gNB/TRP 1c-02 may transfer the SRS resource configuration information to the UE 1c-01 through RRC signaling.

In step 1c-30, the serving gNB/TRP 1c-02 may transmit an NRPPa positioning information response message to the LMF 1c-04. (NRPPa positioning information response)

The NRPPa positioning information response message transmitted by the serving gNB/TRP 1c-02 may be used to transfer the SRS resource configuration information (e.g., position on a time/frequency axis of SRS resource, period, spatial relation information, etc.) finally transferred to the UE 1c-01 in step 1c-25 to the LMF.

In step 1c-35, the LMF 1c-04 may transmit an NRPPa positioning activation request message to the serving gNB/TRP 1c-02. (NRPPa positioning activation request)

When the UE 1c-01 is configured to transmit semi-persistent or aperiodic SRS, the NRPPa positioning activation request message may be used by the LMF 1c-04 to request the serving gNB/TRP 1c-02 to activate the SRS transmission of the UE 1c-01.

In step 1c-40, the serving gNB/TRP 1c-02 may configure the UE 1c-01 to activate the SRS transmission. (Activate UE SRS transmission)

The method may include a process in which the serving gNB/TRP 1c-02 receiving the NRPPa positioning activation request message instructs the UE 1c-01 to activate SRS through MAC CE or DCI.

In step 1c-45, the serving gNB/TRP 1c-02 may transmit an NRPPa positioning activation response message to the UE 1c-01. (NRPPA positioning activation response)

The NRPPa positioning activation response message may be used by the serving gNB/TRP 1c-02 to transfer information on whether the SRS activation is completed (or whether the SRS activation is completed) to the LMF 1c-04 in response to the NRPPa positioning activation request message.

In step 1c-55, the LMF 1c-04 may transmit an NRPPa measurement request message. (NRPPa measurement request)

The NRPPa measurement request message may be used by the LMF 1c-04 to request the serving gNB/TRP 1c-02 and the neighboring gNB/TRP 1c-03 to transfer the SRS measurement and result reporting transmitted by the UE. In this case, the SRS resource information configured for the UE 1c-01 may together be included in the NRPPa measurement request message.

In step 1c-60, the serving gNB/TRP 1c-02 and the neighboring gNB/TRP 1c-03 may measure the SRS transmitted by the UE 1c-01. (UL SRS measurements)

The serving gNB/TRP 1c-02 and neighboring gNB/TRP 1c-03 that has received the SRS measurement request from the LMF 1c-04 through the NRPPa measurement request message may measure the SRS transmitted by the UE 1c-01 based on the SRS configuration information included in the NRPPa measurement request message.

In step 1c-65, the serving gNB/TRP 1c-02 and the neighboring gNB/TRP 1c-03 may transmit the NRPPa measurement response message to the LMF 1c-04. (NRPPa measurement response)

The NRPPa measurement response message may be used by the serving gNB/TRP 1c-02 and the neighboring gNB/TRP 1c-03 that have received the SRS measurement request from the LMF 1c-04 in the above-described step 1c-55 to transfer the SRS measurement result to the LMF 1c-04.

In step 1c-70, the LMF 1c-04 may transmit an NRPPa positioning deactivation message to the serving gNB/TRP 1c-02. (NRPPa positioning deactivation)

The NRPPa positioning deactivation message may be transmitted to the serving gNB/TRP 1c-02 to deactivate the SRS transmission requested in step 1c-35 after the LMF 1c-04 completes the location estimation technique operation.

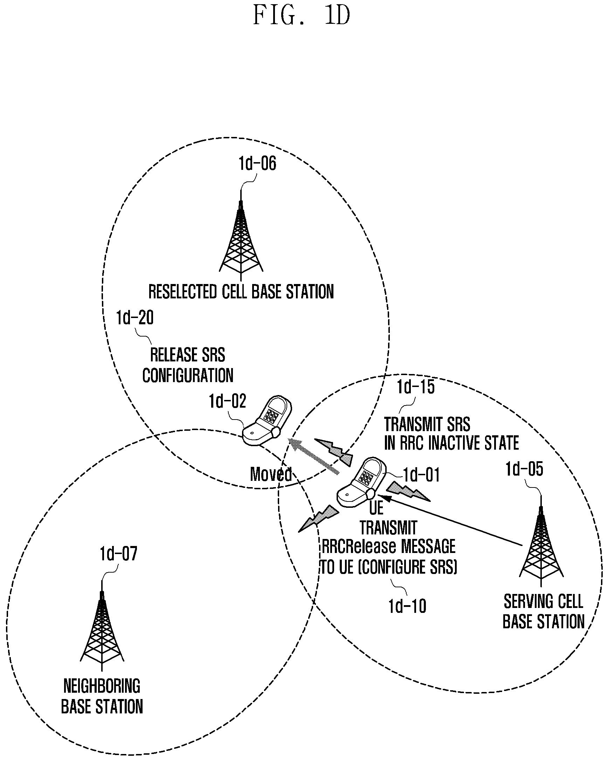

FIG. 1D is a diagram illustrating a process of releasing an SRS transmission configuration when the UE moves to other cell areas according to an embodiment of the present disclosure.

More specifically, FIG. 1D is a diagram illustrating a process in which, after a UE receives sounding reference signal (SRS) transmission configuration information while transitioning to an RRC_INACTIVE state, the UE moves to other cell areas and the SRS transmission configuration is released (or the SRS transmission configuration information is released) according to an embodiment of the present disclosure. In addition, in this specification, the SRS transmission configuration information may be used interchangeably with the term SRS configuration information.

Referring to FIG. 1D, a serving cell base station 1d-05 may transmit an RRCRelease message 1d-10 to a UE 1d-01. The serving cell base station 1d-05 may configure (or instruct) the UE 1d-01 to transmit the SRS in the RRC_INACTIVE state while making the UE 1d-01 transition to the RRC_INACTIVE state by transmitting the RRCRelease message to the UE 1d-01.

To configure (or instruct) the UE to transmit the SRS in the RRC_INACTIVE state for estimating the location of the UE, the base station may transmit the RRCRlease message 1d-10 including the SRS transmission configuration information (e.g., SRS-PosRRC-Inactive) to be used by the UE 1d-01 in the RRC_INACTIVE state.

The SRS transmission configuration information may include at least one of SRS transmission resource configuration information (SRS-PosConfig) or BandWidthPart (BWP) configuration information for transmitting the SRS. The UE that has received the RRCRelease message 1d-10 including the SRS transmission configuration information may transmit the SRS (1d-15) even in the RRC_INACTIVE state based on the configured information according to the SRS transmission configuration information.

When the UE 1d-01 is configured to transmit the SRS in the RRC_INACTIVE state, the UE 1d-01 may only transmit the SRS without performing operations that the UE should perform in an RRC_CONNECTED state.

More specifically, when the UE 1d-01 performs the SRS transmission in the RRC_INACTIVE state, the UE may only perform the SRS transmission without performing operations (e.g., PDCCH monitoring, beam management operation, channel estimation operation, etc.) that the UE should perform in the RRC_CONNECTED state, thereby reducing power consumption by the UE for estimating the location of the UE 1d-01.

The serving cell base station 1d-05 and neighboring base stations 1d-06 and 1d-07 may receive the SRS transmitted by the UE 1d-01 and then transfer the SRS measurement result to the LMF. The LMF may estimate the location of the UE based on the received SRS reception (or measurement) result.

Meanwhile, when at least one (one or more) of the following conditions are no longer satisfied, the UE may stop the SRS transmission and release (1d-20) the SRS configuration (or SRS configuration information) received from the serving cell base station 1d-05.

### ● Condition 1: A timing advance (TA) value to be used for SRS transmission in the RRC_INACTIVE state is valid.

The TA value may mean information (or value) used to adjust the time at which a signal arrives at the base station when the UE transmits a signal through the uplink. When multiple UEs with different distances from the base station transmit uplink signals based on their respective downlink signal synchronization, the signals transmitted by each UE may arrive at the base station at different times due to a difference in propagation delay time, which may cause interference between the signals. In particular, in the OFDM demodulation method, the interference between OFDM symbols may occur severely when the time synchronization is not aligned.

Therefore, in order to prevent the problem, the base station may estimate the propagation delay time between the base station and the UE to configure an appropriate TA value for each UE. By configuring an appropriate TA value for each UE, the base station may adjust the time at which each UE transmits the uplink signals and prevent the interference between the uplink signals.
- The TA value may be determined to be invalid when the TA value corresponds to at least one of the two cases described below.

1) When inactivePosSRS-TimeAlignmentTimer expires.
   inactivePosSRS-TimeAlignmentTimer may be started at the time at which the SRS transmission in the RRC_INACTIVE state is configured through the RRCRelease message 1d-10, and may be restarted at the time (e.g., the time at which the base station indicates a new TA value through timing advance command MAC CE) at which TA value is updated. Therefore, when the TA value update is not performed for a certain period of time (e.g., inactivePosSRS-TimeAlignmentTimer configuration value), inactivePosSRS-TimeAlignmentTimer expires and the UE may determine that the TA value is invalid.
2) When an RSRP value of a pathloss reference signal changes by greater than or equal to an inactivePosSRS-RSRP-ChangeThreshold value compared to a reference value.
   inactivePosSRS-RSRP-ChangeThreshold may be configured together when the UE is configured to transmit SRS in an RRC_INACTIVE state through the RRCRelease message 1d-10. The UE may store the RSRP value of the pathloss reference signal measured at the time when the TA was last updated as the reference value. The pathloss reference signal may be a positioning reference signal transmitted from the serving cell base station 1d-05 or the neighboring base stations 1d-06 and 1d-07, and may also be configured for the UE through the RRCRelease message. Thereafter, when the amount of change in the RSRP value of the current pathloss reference signal compared to the stored RSRP reference value becomes larger than the inactivePosSRS-RSRP-ChangeThreshold value, the UE may determine that the TA value is invalid. That is, when the change in the RSRP value of the pathloss reference signal after the TA value update is a certain level or more, it means that the distance change between the UE and the base station has been large, so the UE may determine that the TA value is no longer valid.

The inactivePosSRS-TimeAlignmentTimer and the inactivePosSRS-RSRP-ChangeThreshold value used for TA validity verification may together be included in the SRS transmission configuration information in the RRC_INACTIVE state and transferred to the UE 1d-01 through the RRCRelease message 1d-10.

### ● Condition 2. The UE does not reselect other cells.

- When the reselection condition to other cells is satisfied as the UE moves in the RRC_INACTIVE state, the UE may reselect a new cell. When the UE reselects cells other than a serving cell that configure the SRS configuration information in the RRC_INACTIVE state through the RRC Release message, the UE may stop the SRS transmission and release (1d-20) the SRS configuration information received from the serving cell base station 1d-05.

When the conditions are not met and the UE stops the SRS transmission in the RRC_INACTIVE state, the base stations 1d-05, 1d-06, and 1d-07 that have measured the SRS transmitted by the corresponding UE for estimating the location of the UE may fail to measure the SRS. Thereafter, the network may attempt to configure the SRS transmission again for estimating the location of the corresponding UE. In this case, the UE should transition to the RRC_CONNECTED state to receive the SRS transmission configuration information again. In this case, the transition of the UE to the RRC_CONNECTED state may be a major factor that increases the power consumption of the UE during the process of estimating the location of the UE.

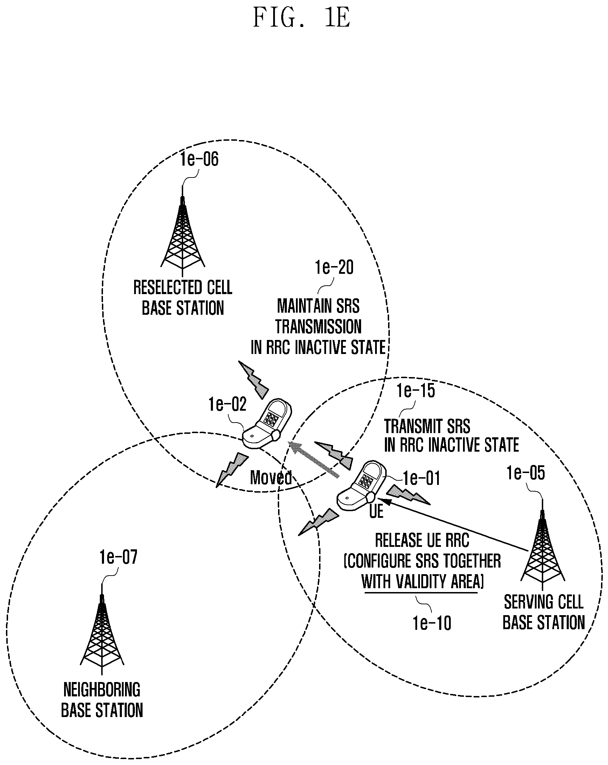

FIG. 1E is a diagram illustrating a process of maintaining the SRS transmission configuration even if the UE moves to other cell areas according to an embodiment of the present disclosure.

More specifically, FIG. 1E is a diagram illustrating a process in which the UE receives valid SRS transmission configuration information within a specific area while transitioning to the RRC_INACTIVE state, and then the SRS transmission configuration is maintained even if the UE moves to other cell areas, according to an embodiment of the present disclosure.

Referring to FIG. 1E, a serving cell base station 1e-05 may transmit an RRCRelease message 1e-10 to a UE 1e-01.

The serving cell base station 1e-05 may configure or instruct the UE 1e-01 to transmit the SRS in the RRC_INACTIVE state while making the UE 1e-01 transition to the RRC_INACTIVE state by transmitting the RRCRelease message to the UE 1e-01. To configure (or instruct) the UE 1e-01 to transmit the SRS in the RRC_INACTIVE state for estimating the location of the UE le-01, the serving cell base station 1e-05 may transmit the RRCRlease message 1e-10 including the SRS transmission configuration information (e.g., SRS-PosRRC-Inactive) to be used by the UE 1e-01 in the RRC_INACTIVE state. In this case, the serving cell base station 1e-05 may configure a valid area (referred to as a 'validity area' in this disclosure) within which the SRS transmission configuration is valid together. More specifically, the RRCRelase message 1e-10 may be transmitted including validity area information. The validity area may be configured in units of SRS-PosRRC-InactiveConfig, SRS-PosResourceSet, or SRS-POSResource included in the RRCRelease message 1e-10. In other words, the SRS-PosRRC-InactiveConfig, SRS-PosResourceSet, or SRS-POSResource configuration information may be connected to a specific validity area. The validity area may be configured through at least one of the following options.
- Option 1: It may be configured in the form of a list of cells.
   - Each item in the list may include an indicator (e.g., at least one combination of NR Cell Global ID, PCI, or NR-ARFCN) indicating each cell.
   - When the validity area is configured in the form of the list of cells as described above, the method for a UE to interpret a validity area may be one of the following two.
      1) When the current serving cell is one of cells included in the list of cells expressing the validity area, the UE may determine that it is within the validity area.
      2) When the UE may receive a positioning reference signal (e.g., SSB, DL-PRS, etc.) from all cells included in the list of cells expressing the validity area, the UE may determine that it is within the validity area.
- Option 2-1: It may be configured identically to an RAN notification area.
   - When the serving cell base station 1e-05 configures the SRS transmission in the RRC_INACTIVE state through the RRCRelease message le-10, it may use the RAN notification area included in the same RRCRelease message 1e-10 as the validity area. In other words, the previously defined RAN notification area may be reused as the validity area without configuring a separate validity area. In this case, the validity area may be the same as the RAN notification area.
   Specifically, RAN-NotificationAreaInfo IE included in the RRCRelease message may configure (or indicate) the validity area together. In this case, the serving cell base station 1e-05 may additionally configure a 1-bit indicator in the RRCRelease message 1e-10 to indicate whether the validity area of the SRS transmission configuration configured through the RRCRelease message 1e-10 is the serving cell that has transmitted the corresponding RRCRelease message as before or is the RAN notification area configured through the RAN-NotificationAreaInfo.
- Option 2-2: Some of the RAN notification areas may be configured as the validity area.
   - When configuring the SRS transmission in the RRC_INACTIVE state through the RRCRelease message le-10, the serving cell base station 1e-05 may configure some of the RAN notification areas included in the same RRCRelease message as the validity area.
   Specifically, ran-NotificationAreaInfo included in the RRCRelease message indicates the RAN notification area in the form of cellList or ran-AreaConfigList, and only some of the items (PLMN-RAN-AreaCell or PLMN-RAN-AreaConfig) included in each list may be configured as the validity area. To this end, the validity area may be defined as a list of indexes for indicating some of items included in a list (cellList or ran-AreaConfigList) configured through a ran-NotificationAreInfo field. For example, when a total of 10 PLMN-RAN-AreaCells are included in cellList, a list including 5 indexes indicating each item of the cellList may together be configured in the SRS transmission configuration information (e.g., SRS-PosRRC-Inactive) within the RRCRelease message 1e-10 to configure only 5 of the PLMN-RAN-AreaCells as the validity area.
- Option 3: It may be configured identically to a tracking area.
   - When the base station configures the SRS transmission in the RRC_INACTIVE state through the RRCRelease message, the tracking area configured through a registration accept message in the existing network registration phase may be used as the validity area. In other words, the previously configured tracking area may be reused as the validity area without configuring a separate validity area. In this case, the validity area may be the same as the tracking area. In this case, the base station may add, to the RRCRelease message 1e-10, a 1-bit indicator for indicating whether the validity area of the SRS transmission configuration information (e.g., SRS-PosRRC-Inactive) within the RRCRelease message 1e-10 is the serving cell that has transmitted the corresponding RRCRelease message 1e-10 as before or is the tracking area configured in the network registration phase.
- Option 4: It may be included by the configuration information within SRS-PosResource without a separate configuration.
   - The base station may implicitly indicate the validity area through the pieces of information included in the SRS configuration without a separate explicit validity area configuration.
   - The UE may be determined to be located within the validity area when at least one of the following conditions is satisfied.
      * Condition 1: The UE should be able to measure an SSB transmitted from the cell that has received the RRCRelease message including the SRS transmission configuration in the RRC_INACTIVE state. (Alternatively, the signal strength or signal quality of the measured SSB should be a certain level or more.)
      * Condition 2: The UE should be able to measure a downlink signal (i.e., a downlink signal configured through a spatialRelationInfoPos field) configured for spatial information. Alternatively, the signal strength or signal quality of the measured downlink signal should be a certain level or more.
      * Condition 3: The UE should be able to measure a downlink signal (i.e., a downlink signal configured through a pathlossReferenceRS-Pos field) configured for pathloss information.

The UE that has received the RRCRelease message 1e-10 including the SRS transmission configuration information may perform SRS transmission (le-15) even in the RRC_INACTIVE state based on the configured information. In this case, even if the UE performs cell reselection to cells other than the cell to which the UE has transmitted the RRCRelease message 1e-10 including the SRS transmission configuration information due to the movement of the UE, when the UE is located within the validity area associated with the SRS configuration information currently being used, the UE may continue to perform the SRS transmission using the corresponding SRS configuration information (1e-20).

For example, when the validity area of the SRS transmission configuration information received by the UE through the RRCRelease message 1e-10 is in the form of the list of cells as in the above-described option 1 and cells operated by the neighboring base station 1e-07 has been included in the corresponding list, even if the UE reselects a cell to the neighboring base station 1e-06 cell out of the area of the serving cell base station 1e-05 cell from which the UE has received the RRCRelease message 1e-10, the SRS transmission (configuration) may be maintained in the RRC_INACTIVE state.

That is, according to an embodiment of the present disclosure, the SRS transmission configuration in the RRC_INACTIVE state is connected to a specific validity area, so the UE may be moved within the validity area and maintain the SRS transmission in the RRC_INACTIVE state. Therefore, compared to a situation where a new SRS transmission configuration should be received after transitioning to the RRC_CONNECTED state every time the cell reselection occurs, the power consumption of the UE for estimating the location of the UE may be reduced.

Meanwhile, in order for the UE to maintain the SRS transmission based on the existing configuration information after the cell reselection within the validity area, a procedure may be required to update the TA value used for the SRS transmission based on the reselected cell. When the UE uses the TA value used in the legacy serving cell to transmit the SRS within coverage of a newly selected cell, significant interference may occur in the uplink signal reception of the newly selected cell.

Therefore, at least one of the following methods may be considered as a method for a UE to update a TA value after cell reselection.
1) A method for performing a random access procedure on a reselected cell to configure a new TA value (in other words, a method for receiving a timing advance command), or
2) A method for reusing the TA value used in an immediately previous serving cell even after cell reselection when the reselected cell belongs to the same timing advance group (TAG) as a serving cell immediately before reselection.

In order to reuse the TA value used in the immediately previous cell after the cell reselection as in the method 2), information notifying which TAG each cell included in the validity area belongs to may together be included in the validity area configuration within the RRCRelease message 1e-10. Here, the TAG means a group of cells that may use the same TA value, and the UE may manage the TA value in units of actual TAGs.

Additionally, even when the UE maintains the SRS transmission in the RRC_INACTIVE state without the cell reselection, when the TA value is determined to be invalid according to the TA validity determination condition described in the above-described FIG. 1D, a procedure to update the TA value may be performed. In this case, as a procedure to update the TA value by the UE, a procedure to perform a random access procedure on the current serving cell to configure a new TA value may be used.

As described above, in order for the UE to perform the SRS transmission while maintaining the RRC_INACTIVE state within the validity area, a procedure to update the TA value may be performed in two cases (1. when the cell reselection is performed, or 2. when the TA value is determined to be invalid within the existing cell). Specific procedures for updating the TA value will be described in the embodiment of FIG. 1F below.

Meanwhile, when the TA value is determined to be invalid according to the TA validity determination condition as in FIG. 1D above, the SRS transmission may be stopped and the SRS transmission configuration information that the UE has received through the RRCRelease message 1e-10 may be released. In this case, since the network make the UE transition to the RRC_CONNECTED state and then transfer new SRS transmission configuration information in order to configure the UE to transmit the SRS again, the power consumption of the UE may increase. Therefore, in order to reduce the occurrence frequency of the problem situation where the TA value becomes invalid and the SRS transmission is stopped and the SRS transmission configuration is released, the condition for determining the validity of the TA value may be alleviated.

More specifically, a configuration range of variables (e.g., inactivePosSRS-TimeAlignmentTimer and/or inactivePosSRS-RSRP-ChangeThreshold) used to determine whether the TA value is valid may be expanded as in the example.
- New values may be added to a configuration value option of a TimeAlignmentTimer variable used to configure a value of an inactivePosSRS-TimeAlignmentTimer so that the corresponding value may be configured to a larger value than the existing value. (Values highlighted in underline may be newly added.)

For example, the TimeAlignmentTimer may be configured to any one of 20480ms, 40960ms, 81920ms, and 163840ms.

| |
|---|
| TimeAlignmentTimer-r18 ::= ENUMERATED {ms500, ms750, ms1280, ms1920, ms2560, ms5120, ms10240, ms20480, ms40960, ms81920, ms163840, spare4, spare3, spare2, spare1, infinity} |

- New values may be added to a configuration value option of an RSRP-ChangeThreshold variable used to configure an inactivePosSRS-RSRP-ChangeThreshold value so that the corresponding value may be configured to a larger value than the existing value. (values highlighted with underline may be newly added.)

For example, the RSRP-ChangeThreshold value may be configured to any one of 34dB, 38dB, 42dB, 46dB, or 50dB.

| |
|---|
| RSRP-ChangeThreshold-r18 ::= ENUMERATED {dB4, dB6, dB8, dB10, dB14, dB18, dB22, dB26, dB30, dB34, dB38, dB42, dB46, dB50, spare2, spare1} |

The inactivePosSRS-TimeAlignmentTimer and the inactivePosSRS-RSRP-ChangeThreshold value used for the TA validity verification may together be included in the RRCRelease message 1e-10 including the SRS transmission configuration information in the RRC_INACTIVE state and transferred to the UE le-01.

FIG. 1F is a diagram illustrating a procedure for the UE to maintain the SRS transmission in the RRC inactive state according to an embodiment of the present disclosure.

More specifically, FIG. 1F is a diagram illustrating a procedure for the UE to receive valid SRS transmission configuration information from a base station within a specific area and maintain the SRS transmission in an RRC_INACTIVE state, according to an embodiment of the present disclosure.

In step 1f-20, a UE 1f-01 may exchange UE capability information (UE capability exchange) with a last serving cell 1f-05.

In step 1f-35, the UE 1f-01 may receive an RRCRelease message from the last serving cell 1f-05. The RRCRelease message may include the SRS transmission configuration information (SRS-PosRRC-InactiveConfig) for the SRS transmission in the RRC_INACTIVE state and a valid area (hereinafter, the term "validity area" may be used interchangeably.) within which the SRS transmission configuration information is valid. In other words, the last serving cell 1f-05 may configure the SRS transmission configuration information for the SRS transmission in the RRC_INACTIVE state and a valid area (hereinafter referred to as validity area) within which the SRS transmission configuration information is valid together.

In step 1f-37, the UE 1f-01 may transition to the RRC_INACTIVE state. The UE 1f-01 may transmit the SRS in the RRC_INACTIVE state.

In step 1f-40, the UE 1f-01 performs the SRS transmission in the RRC_INACTIVE state, and when the TA value is determined to be invalid according to the timing advance (TA) validity determination condition as described above, the UE may perform a random access procedure to update the TA value to the last serving cell 1f-05.

In step 1f-50, the UE 1f-01 may perform the random access procedure to update the TA value in a reselected cell 1f-10 when the UE 1f-01 performs the cell reselection while maintaining the SRS transmission in the RRC_INACTIVE state.

However, steps 1f-40 and 1f-50 described above may be omitted.

Thereafter, when the UE continues to move out of the validity area in step 1f-61, the SRS transmission may be stopped and the SRS transmission configuration information (SRS-PosRRC-InactiveConfig) may be released in step 1f-62.

The specific procedures for the above-described operations may be described step by step as follows.
- UE Capability Exchange (1f-20): The UE 1f-01 may exchange the UE capability information with the last serving cell 1f-05 **in** the RRC_CONNECTED state. The UE 1f-01 may report the UE capability information related to the SRS transmission operation to the last serving cell 1f-05 **in** the RRC_INACTIVE state.

More specifically, when the SRS transmission operation configuration **in** the RRC_INACTIVE state is configured with a specific validity area, the UE 1f-01 may report to the last serving cell 1g-05 whether the UE 1f-01 **in** the RRC_INACTIVE state may understand the configuration information and perform the necessary operation to perform the SRS transmission **in** the validity area.

**In** addition, the UE 1f-01 may report to the serving cell 1f-05 whether to perform the random access procedure to update the TA value used for the SRS transmission **in** the RRC_INACTIVE state.

**In** addition, when the TA value used for the SRS transmission needs to be updated by the cell reselection **in** the RRC_INACTIVE state, if the reselected cell belongs to the same TAG as the cell immediately before the reselection, the UE 1f-01 may report to the last serving cell 1f-05 whether it may reuse the TA value used **in** the immediately previous serving cell for the SRS transmission even after the cell reselection.

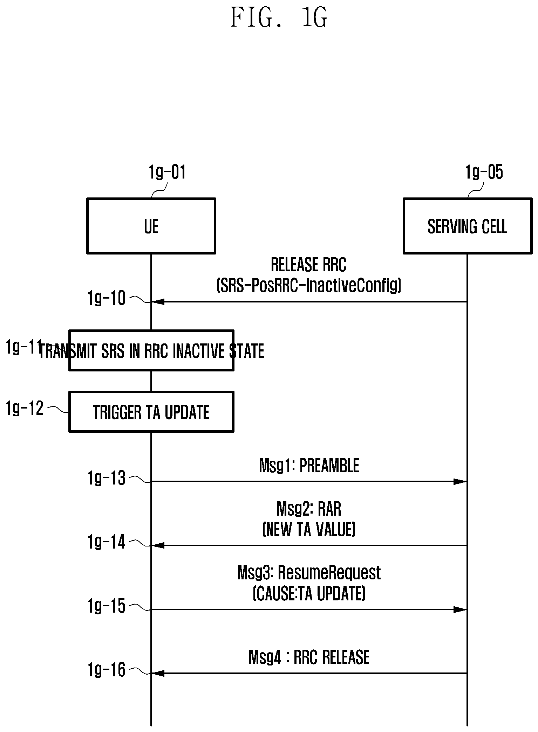

**In** addition, the UE 1f-01 may report to the last serving cell 1f-05 whether it supports extended variables (TimerAlignmentTimer-r18 and RSRP-ChangeThreshold-r18) (i.e., whether it may understand and apply the configuration information using the extended variables) to alleviate the conditions for determining the validity of the TA value as described above **in** FIG. 1E.
- RRCRelease (1f-35): The last serving cell 1f-05 may configure the UE 1f-01 to transmit the SRS **in** the RRC_INACTIVE state through the RRCRelease message. **In** this case, the SRS transmission configuration information **in** the RRC_INACTIVE state may be configured **in** association with the validity area of the corresponding configuration information. A specific method for configuring the SRS transmission configuration information and the corresponding validity area may refer to the contents described above with reference to **in** FIG. 1E.
- SRS Tx **in** RRC_INACTIVE (1f-37): A UE 1f-01 may perform the SRS transmission using the SRS transmission configuration information **in** the RRC_INACTIVE state configured **in** step 1f-35.
- TA update **in** case of invalid TA (1f-40): The UE 1f-01 may update the TA value through the random access procedure with the last serving cell 1f-05 when it determines that the TA value used for the SRS transmission in the RRC_INACTIVE state is no longer valid.
- TA validation failure (1f-41): The UE 1f-01 may determine the validity of the TA value used for the SRS transmission in the RRC_INACTIVE state as described above with reference to FIG. 1D.
- RACH procedure to update TA value (1f-43): when the UE 1f-01 determines that the TA value used for the SRS transmission is no longer valid in step 1f-41, it may perform the random access procedure with the serving cell to update the TA value. In other words, as described above with reference to FIG. 1D, when the inactivePosSRS-TimeAlignmentTimer expires or the RSRP value of the pathloss reference signal changes by greater than or equal to the inactivePosSRS-RSRP-ChangeThreshold value compared to the reference value, the random access procedure to update the TA value may be started. The specific process of updating the TA value through the random access procedure is described in the embodiment of FIG. 1G below.
- Continue SRS Tx in RRC_INACTIVE (1f-45): The UE 1f-01 may continue to perform the SRS transmission in the RRC_INACTIVE state after applying the TA value updated in step 1f-43.
- TA update in case of cell reselection within validity area (1f-50): The UE 1f-01 may perform the cell reselection while performing the SRS transmission in RRC_INACTIVE state and continue to perform the SRS transmission after updating the TA value as needed.
- Cell reselection within validity area (If-51): When the UE 1f-01 performs the cell reselection while performing the SRS transmission in the RRC_INACTIVE state and the reselected cell is included in the validity area associated with the SRS transmission configuration that the UE is using, the UE 1f-01 may continue to perform the SRS transmission.

In this case, the UE 1f-01 may update the TA value to be used for the SRS transmission in the reselected cell by using at least one (one or more combinations) of the following options. In this case, the TA value to be used for the SRS transmission may ultimately mean the TA value of the TAG to which the reselected cell belongs. Here, the TAG means a group of cells that may use the same TA value, and the UE may manage the TA value in units of actual TAGs.
* Option 1: Assuming that all cells within the validity area belong to different TAGs, the UE may unconditionally update the TA value through the random access procedure (1f-53) with the reselected cell after the cell reselection. In other words, the TA value of the TAG to which the reselected cell belongs may be configured according to the timing advance command received through the random access procedure. In this case, the UE may restart the inactivePosSRS-TimeAlignmentTimer used for the TA validation. In addition, the RSRP value of the pathloss reference signal measured at the time of the cell reselection may be configured as the RSRP reference value of the pathloss reference signal used for the TA validation.
* Option 2: Assuming that all cells within the validity area belong to the same TAG, the UE may reuse the TA value used in the cell immediately before the cell reselection even after the cell reselection. In other words, the TA value of the TAG to which the reselected cell belongs may be applied as the TA value used in the immediately previous cell. In this case, the UE may restart the inactivePosSRS-TimeAlignmentTimer. In addition, the RSRP value of the pathloss reference signal measured at the time of the cell reselection may be configured as the RSRP reference value of the pathloss reference signal used for the TA validation.
* Option 3: Whenever the cell reselection is performed as in the Option 1, a 1-bit indicator may be included in the SRS-PosRRC-InactiveConfig within an RRCRelease message (1f-35) to indicate whether the TA value should be updated through the reselected cell and the random access procedure or whether the TA value used in the cell immediately before the reselection should be reused even after the reselection as in the Option 2.
* Option 4: When the cell immediately before the cell reselection and the reselected cell belong to the same TAG, the UE may reuse the TA value used in the cell immediately before the reselection even after the previous cell reselection as it is. In other words, the TA value of the TAG to which the reselected cell belongs may be applied as the TA value used in the immediately previous cell. In this case, the UE may restart the inactivePosSRS-TimeAlignmentTimer. In addition, the RSRP value of the pathloss reference signal measured at the time of the cell reselection may be configured as the RSRP reference value of the pathloss reference signal used for the TA validation. In order to help the UE determine whether the cell immediately before the cell reselection and the reselected cell belong to the same TAG, the TAG information of the cells included in the validity area may be included in the SRS-PosRRC-InactiveConfig within the RRCRelease message (1f-35) in one of the following options:
   ** Option 4-a: A TAG-ID value may be configured for each cell included in the validity area.
   ** Option 4-b: A 1-bit indicator may be configured for each cell to notify whether the previous serving cell that has transmitted the RRCRelease message (1f-35) and each cell included in the validity area belong to the same TAG.

- RACH procedure to update TA value (1f-53): When the UE 1f-01 needs to update the TA value through the random access procedure with the reselected cell 1f-10 after the cell re-selection according to the procedure in step 1f-51, the UE 1f-01 may perform the random access procedure to update the TA value.

More specifically, when the RRC layer of the UE 1f-01 needs the random access procedure to update the TA value of the TAG to which the reselected cell belongs according to the procedure in step 1f-51, the RRC layer may configure (instruct or request) the MAC layer to start the random access procedure. The specific process of updating the TA value through the random access procedure was described in the embodiment of FIG. 1G below.
- Continue SRS Tx in RRC_INACTIVE (1f-55): The UE may continue to perform the SRS transmission in the RRC_INACTIVE state after applying the TA value updated in steps 1f-51 and 1f-53.
- Cell reselection out of validity area (1f-61): The UE 1f-01 may perform cell reselection to a cell that does not belong to the validity area.
- Release SRS-PosRRC-InactiveConfig (1f-62): When the UE performs cell reselection to a cell that does not belong to the validity area in step 1f-61, the UE may delete (release) the SRS-PosRRC-InactiveConfig configuration information within the RRCRelease message (1f-35) and stop the inactivePosSRS-TimeAlignmentTimer.

More specifically, when the UE performs the cell reselection to the cell that does not belong to the validity area, the RRC layer of the UE may delete (release) the SRS-PosRRC-InactiveConfig configuration information and instruct the lower layer (MAC layer) to stop the inactivePosSRS-TimeAlignmentTimer.

FIG. 1G is a diagram illustrating a procedure for the UE to update the TA value used for the SRS transmission in the RRC inactive state according to an embodiment of the present disclosure.

More specifically, FIG. 1G is a diagram illustrating a procedure for the UE to update the TA value used for the SRS transmission in the RRC_INACTIVE state through the random access procedure with the serving cell, according to an embodiment of the present disclosure.

Referring to FIG. 1G, a UE 1g-01 may update a TA value used for SRS transmission in an RRC_INACTIVE state through a random access procedure with a serving cell 1g-05. In other words, the TA value of the TAG to which the serving cell belongs may be updated through the random access procedure with the serving cell. The specific operation of each step may be described as follows.

In step 1g-10, the UE 1g-01 may receive an RRCRelease message from a serving cell 1g-05. (RRCRelease): The UE 1g-01 may receive SRS transmission configuration information for transmitting SRS in an RRC_INACTIVE state from the serving cell 1g-05 through an RRCRelease message (1g-10).

In step 1g-11, the UE 1g-01 may transmit the SRS in the RRC_INACTIVE state. (SRS Tx in RRC_INACTIVE) The UE 1g-01 may perform the SRS transmission in the RRC_INACTIVE state based on the SRS transmission configuration information received in step 1g-10.

In step 1g-12, the UE 1g-01 may trigger the TA value update. (Trigger TA update) The UE 1g-01 may start a random access procedure to update the TA value in the following cases:
1) When it is determined that the TA value is no longer valid (1f-40). In other words, when the inactivePosSRS-TimeAlignmentTimer expires as described in FIG. 1D or the RSRP value of the pathloss reference signal changes by greater than or equal to the inactivePosSRS-RSRP-ChangeThreshold value compared to the reference value.
2) When the UE 1g-01 performs cell reselection to any cell included in a validity area (1f-50). For reference, in this drawing, for the convenience of description, only the case where the UE 1g-01 performs the random access with the serving cell 1g-05 that has transmitted the RRCRelease message in step 1g-10 is illustrated, but in the case where the actual UE performs the cell reselection, the TA value may be updated by performing the following procedures (1g-13 to 1g-16) with a new reselected serving cell, not the serving cell that has transmitted the RRCRelease message in step 1g-10.

In step 1g-13, the UE 1g-01 may transmit a preamble. -(Msg1. Preamble) The UE 1g-01 may start a random access procedure to update the TA value by transmitting the preamble to the serving cell 1g-05.

In step 1g-14, the UE 1g-01 may receive an RAR. (Msg2. RAR) The serving cell 1g-05 may receive the preamble from the UE 1g-01 in step 1g-13 and then respond with an RAR message.

The RAR message may include time/frequency resources (i.e., UL grant for uplink data transmission) for transmitting Msg3 together with the timing advance command indicating the TA value that the UE should use when transmitting the Msg3 in step 1g-15 below. The UE may apply the timing advance command to the TAG to which the serving cell belongs. In this case, when the UE uses the preamble resource configured only for the corresponding UE in step 1g-13, the inactivePosSRS-TimeAlignmentTimer may be restarted without a contention resolution procedure.

In step 1g-15, the UE 1g-01 may transmit a ResumeRequest message. (Msg3. ResumeRequest) The UE 1g-01 may transmit Msg3 including an RRC ResumeRequest message using timing advance command information and UL grant information included in the RAR received in step 1g-14. In this case, newly defined resumeCause (e.g., TA-update) may be included in the ResumeRequest message to notify that the random access procedure currently being performed by the UE is for the TA update purpose.

The UE 1g-01 may receive the RRCRelease message in step 1g-16. (Msg4. RRCRelease)

The serving cell 1g-05 may determine that the UE 1g-01 has started the random access procedure and the RRC connection resume procedure only for the TA update through the resumeCause information within the ResumeRequest message transmitted by the UE 1g-01. In this way, the base station may make the UE transition back to the RRC_INACTIVE state by transmitting the RRCRelease message without performing an unnecessary RRC connection resume procedure.

In addition, since the base station recognizes that the UE has started the random access procedure and the RRC connection resume procedure only for the TA update, the base station may avoid redundantly including the UE configuration information in the RRC_INACTIVE state that is unnecessarily transmitted through the RRCRelease message in step 1g-10 within the RRCRelease message transmitted. More specifically, when the base station does not include the configuration information (SRS-PosRRC-InactiveConfig) related to the SRS transmission in the RRC_INACTIVE state in the RRCRelease message (1g-16), the UE may reuse the configuration information received within the RRCRelease received in step 1g-10.

In addition, the base station may include an indicator to explicitly indicate the reuse of the configuration information (SRS-PosRRC-InactiveConfig) related to the SRS transmission previously transferred in step 1g-10 in the RRCRelease message (1g-16).

When the UE uses the contention-based preamble resource in step 1g-13, the UE may complete the contention resolution procedure by receiving Msg4.

In this case, when the contention resolution procedure fails, the UE may cancel the application of the timing advance command performed on the TAG to which the serving cell belongs in step 1g-14. Conversely, when the contention resolution procedure succeeds, the UE may restart the inactivePosSRS-TimeAlignmentTimer.

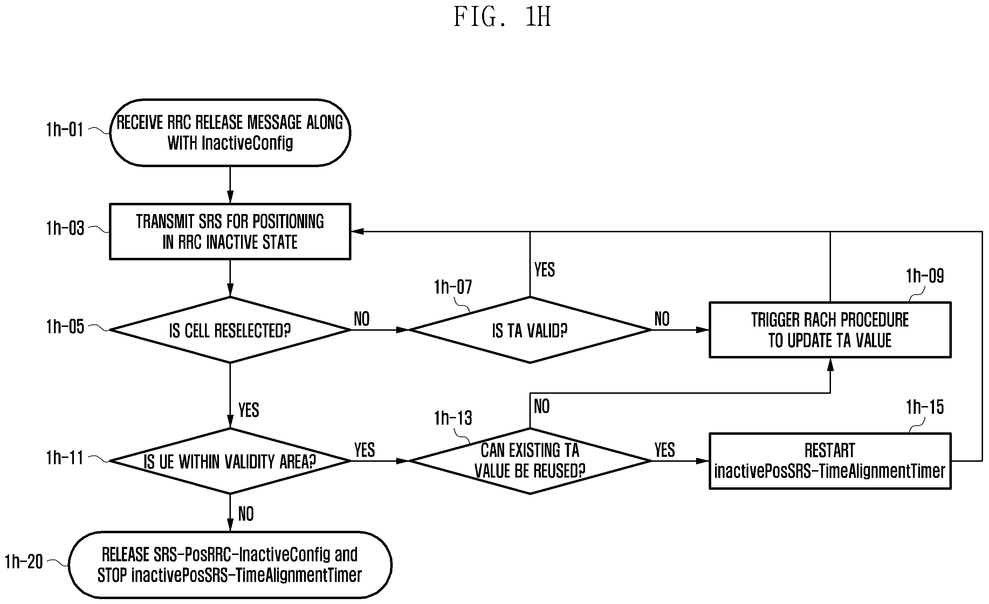

FIG. 1H is a flowchart illustrating an operation when the UE receives SRS transmission configuration information in the RRC inactive state according to an embodiment of the present disclosure.

Referring to FIG. 1H, the UE may perform the SRS transmission while maintaining the RRC_INACTIVE state within the validity area based on the configuration information (SRS-PoSRRC-InactiveConfig) for the SRS transmission in the RRC_INACTIVE state included in the RRCRelease message. The related specific procedures may be as follows.

In step 1h-01, the UE may receive the RRCRelease message including the configuration information for the SRS transmission in the RRC_INACTIVE state. (Receive RRC Release message with SRS-PosRRC-InactiveConfig)

The UE may receive the RRC Release message from the serving cell and transition to the RRC_INACTIVE state. In this case, the configuration information (SRS-PosRRC-InactiveConfig) for performing the SRS transmission in the RRC_INACTIVE state for estimating the location of the UE may be included in the corresponding RRC Release message. In addition, the validity area of the corresponding SRS transmission configuration information may be configured together as described above in FIG. 1E.

In step 1h-03, the UE may transmit SRS for positioning in the RRC_INACTIVE state. (Transmit SRS for positioning in RRC_INACTIVE state)

The UE may perform the SRS transmission for estimating the location of the UE in the RRC_INACTIVE state using the configuration information (SRS-PosRRC-InactiveConfig) for the SRS transmission in the RRC_INACTIVE state received in step 1h-01.

In step 1h-05, the UE may perform the cell reselection. (Cell reselection)

The UE may continuously identify whether the cell reselection is performed while performing the SRS transmission in the RRC_INACTIVE state.

When the cell reselection is not performed, the UE may proceed to step 1h-07 to identify whether the TA value (in other words, the TA value of the TAG to which the current serving cell belongs) used for the SRS transmission is valid. When the cell reselection has been performed, the UE may proceed to step 1h-11 to identify whether the UE is still within the validity area associated with the currently used SRS transmission configuration.

In step 1h-07, the UE may determine whether the TA value is valid. (TA is valid?)

As described with reference to the above FIG. 1D, the UE may identify whether the TA value (in other words, the TA value of the TAG to which the current serving cell belongs) used for the SRS transmission is valid.

When the TA value is valid, the UE may proceed to step 1h-03 and continue to perform the SRS transmission in the RRC_INACTIVE state. On the other hand, when the TA value is invalid, the UE may proceed to step 1h-09 and perform a random access procedure to update the TA value.

In step 1h-09, the UE may trigger a procedure to update the TA value. (Trigger RACH procedure to update TA value) The UE may perform the random access procedure to update the TA value (in other words, the TA value of the TAG to which the current serving cell belongs) used for the SRS transmission as described in the above FIG. 1G.

In step 1h-11, the UE may determine whether the reselected cell is included in the validity area. (Within validity area?)

When the UE reselects a cell while performing the SRS transmission in the RRC_INACTIVE state, the UE may determine whether the reselected cell is included in the validity area associated with the SRS transmission configuration currently being used.

In this case, when the reselected cell is not included in the validity area associated with the SRS transmission configuration, the UE may proceed to step 1h-20 to stop the SRS transmission.

On the other hand, when the reselected cell is included in the validity area associated with the SRS transmission configuration, the UE may proceed to step 1h-13 to identify whether the TA value previously held by the UE may be reused in the reselected cell.

In step 1h-13, the UE may determine whether to reuse the TA value of the immediately previous cell. (Can reuse any existing TA value?) The UE may determine whether to reuse the TA value of the cell immediately before the reselection as the TA value to be used for the SRS transmission in the reselected cell as described in step 1f-51 of the above FIG. 1F or whether to update the TA value through the random access procedure with the reselected cell.

When it is determined to reuse the TA value of the cell immediately before the reselection, the UE may proceed to step 1h-15 and perform a procedure to reuse the TA value. When it is determined to update a new TA value through the random access procedure with the reselected cell, the UE may proceed to step 1h-09 and perform the random access procedure to update the TA value.

In step 1h-15, the inactivePosSRS-TimeAlignmentTimer may be restarted. (Restart inactivePosSRS-TimeAlighnmentTimer)

As described in step 1f-51 of the above FIG. 1F, when the UE reuses the TA value used in the immediately previous cell, the UE may restart the inactivePosSRS-TimeAlignmentTimer. In addition, in this case, the RSRP value of the pathloss reference signal measured at the time of the cell reselection may be configured as the RSRP reference value of the pathloss reference signal used for the TA validation.

In step 1h-20, the UE may stop the SRS transmission in the RRC_INACTIVE state and stop the inactivePosSRS-TimeAlignmentTimer. (Release SRS-PosRRC-InactiveConfig)

The UE may stop the SRS transmission in the RRC_INACTIVE state, release the SRS-PosRRC-InactiveConfig information configured in step 1h-01, and stop the inactivePosSRS-TimeAlignmentTimer.

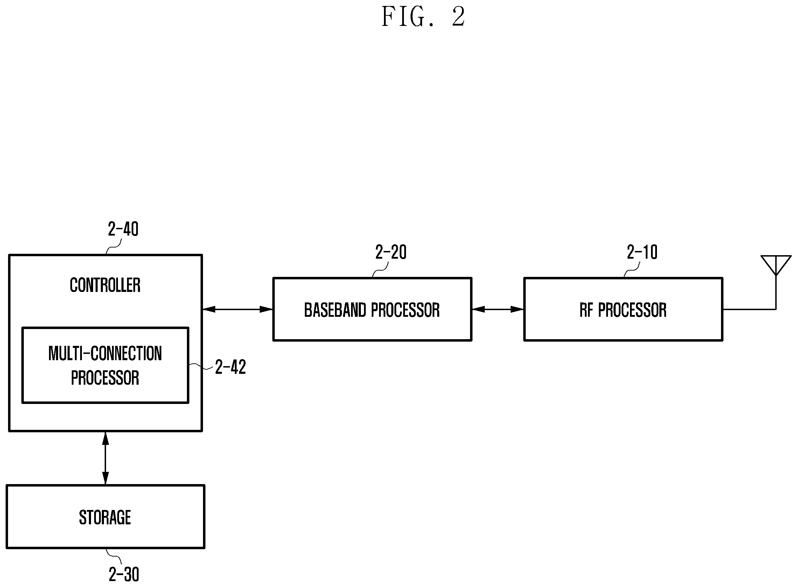

FIG. 2 is a block diagram illustrating an internal structure of a terminal according to an embodiment of the present disclosure.

Referring to FIG. 2, the terminal may include a radio frequency (RF) processor 2-10, a baseband processor 2-20, a storage 2-30, a controller 2-40, etc.

The RF processor 2-10 may perform a function of transmitting and receiving a signal through a wireless channel, such as band conversion and amplification of the signal. That is, the RF processor 2-10 may up-convert a baseband signal provided from the baseband processor 2-20 into an RF band signal and then transmit the RF band signal through an antenna, and down-convert the RF band signal received through the antenna into the baseband signal. For example, the RF processor 2-10 may include a transmission filter, a reception filter, an amplifier, a mixer, an oscillator, a digital to analog converter (DAC), an analog to digital converter (ADC), etc. In FIG. 2, only one antenna is illustrated, but the terminal may include a plurality of antennas. In addition, the RF processor 2-10 may include a plurality of RF chains. In addition, the RF processor 2-10 may perform beamforming. For the beamforming, the RF processor 2-10 may adjust phases and sizes of each signal transmitted and received through the plurality of antennas or antenna elements. In addition, the RF processor may perform MIMO and may receive a plurality of layers when performing a MIMO operation.

The baseband processor 2-20 may perform a conversion function between a baseband signal and a bit string according to physical layer specifications of a system. For example, when transmitting data, the baseband processor 2-20 encodes and modulates a transmitted bit string to generate complex symbols. In addition, when receiving data, the baseband processor 2-20 may reconstruct a received bit stream by demodulating and decoding the baseband signal provided from the RF processor 2-10. For example, in the case of following the orthogonal frequency division multiplexing (OFDM) method, when transmitting data, the baseband processor 2-20 may encode and modulate the transmitted bit stream to generate the complex symbols, map the complex symbols to subcarriers, and then construct the OFDM symbols through an inverse fast Fourier transform (IFFT) operation and a cyclic prefix (CP) insertion. In addition, when receiving data, the baseband processor 2-20 may segment the baseband signal provided from the RF processor 2-10 into OFDM symbol units, reconstruct the signals mapped to the subcarriers through fast Fourier transform (FFT) operation, and then reconstruct the received bit stream through the demodulation and decoding.

The baseband processor 2-20 and the RF processor 2-10 may transmit and receive the signals as described above. Accordingly, the baseband processor 2-20 and the RF processor 2-10 may be referred to as a transmitter, a receiver, a transceiver, or a communication unit. Furthermore, at least one of the baseband processor 2-20 or the RF processor 2-10 may include a plurality of communication modules to support a plurality of different radio access technologies. In addition, at least one of the baseband processor 2-20 or the RF processor 2-10 may include different communication modules to process signals of different frequency bands. For example, the different radio access technologies may include wireless LAN (e.g., IEEE 802.11), cellular networks (e.g., LTE), etc. In addition, the different frequency bands may include super high frequency (SHF) (e.g., 2.NRHz, NRHz) bands, and millimeter wave (mm wave) (e.g., 60GHz) bands.

The storage 2-30 may store data such as basic programs, application programs, and configuration information for the operation of the terminal. In particular, the storage 2-30 may store information related to a second access node performing wireless communication using a second radio access technology. In addition, the storage 2-30 may provide the stored data according to a request of the controller 2-40.

The controller 2-40 may control the overall operations of the terminal. For example, the controller 2-40 may transmit and receive the signal through the baseband processor 2-20 and the RF processor 2-10. In addition, the controller 2-40 may record and read data in the storage 2-30. For this purpose, the controller 2-40 may include at least one processor. For example, the controller 2-40 may include a communication processor (CP) that performs control for communication and an application processor (AP) that controls higher layers such as application programs.

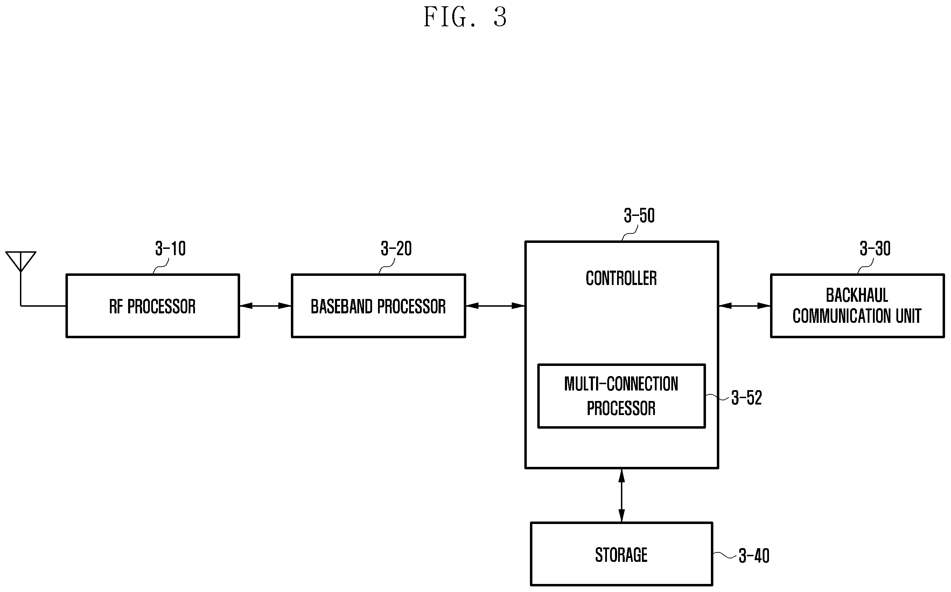

FIG. 3 is a block diagram illustrating a structure of a base station according to an embodiment of the present disclosure.

As illustrated in FIG. 3, the base station may be configured to include an RF processor 3-10, a baseband processor 3-20, a backhaul communication unit 3-30, a storage 3-40, and a controller 3-50.

The RF processor 3-10 may perform a function of transmitting and receiving a signal through a wireless channel, such as band conversion and amplification of the signal. That is, the RF processor 3-10 may up-convert a baseband signal provided from the baseband processor 3-20 into an RF band signal and then transmit the RF band signal through an antenna, and down-convert the RF band signal received through the antenna into the baseband signal. For example, the RF processor 3-10 may include a transmission filter, a reception filter, an amplifier, a mixer, an oscillator, a DAC, an ADC, etc. In FIG. 3, only one antenna is illustrated, but the first access node may include a plurality of antennas. In addition, the RF processor 3-10 may include a plurality of RF chains. In addition, the RF processor 3-10 may perform the beamforming. For the beamforming, the RF processor 3-10 may adjust phases and sizes of each signal transmitted and received through the plurality of antennas or antenna elements. The RF processor may perform a downlink MIMO operation by transmitting one or more layers.

The baseband processor 3-20 may perform a conversion function between a baseband signal and a bit stream according to the physical layer specifications of the first radio access technology. For example, when transmitting data, the baseband processor 3-20 may encode and modulate a transmitted bit stream to generate complex symbols. In addition, when receiving data, the baseband processor 3-20 may reconstruct a received bit stream by demodulating and decoding the baseband signal provided from the RF processor 3-10. For example, in the case of following the OFDM method, when transmitting data, the baseband processor 3-20 may encode and modulate the transmitted bit stream to generate the complex symbols, map the complex symbols to subcarriers, and then construct the OFDM symbols through an IFFT operation and a CP insertion. In addition, when receiving data, the baseband processor 3-20 may segment the baseband signal provided from the RF processor 3-10 into OFDM symbol units, reconstruct the signals mapped to the subcarriers through an FFT operation, and then reconstruct the received bit stream through the demodulation and decoding. The baseband processor 3-20 and the RF processor 3-10 may transmit and receive the signals as described above. Accordingly, the baseband processor 3-20 and the RF processor 3-10 may be referred to as a transmitter, a receiver, a transceiver, a communication unit, or a wireless communication unit.

The backhaul communication unit 3-30 may provide an interface for performing communication with other nodes in the network. That is, the backhaul communication unit 3-30 may convert a bit stream transmitted from the main base station to other nodes, such as an auxiliary base station and a core network, into a physical signal, and convert physical signals received from the other nodes into bit streams.

The storage 3-40 may store data such as basic programs, application programs, and configuration information for the operation of the main base station. In particular, the storage 3-40 may store information about bearers allocated to an accessed terminal, measurement results reported from the accessed terminal, etc. In addition, the storage 3-40 may store information that serves as a decision criterion for whether to provide multiple connections to the terminal or to terminate the multiple connections. In addition, the storage 3-40 may provide the stored data according to a request of the controller 3-50.

The controller 3-50 controls the overall operations of the main base station. For example, the controller 3-50 transmits and receives the signals through the baseband processor 3-20 and the RF processor 3-10 or through the backhaul communication unit 3-30. In addition, the controller 3-50 records and reads data in the storage 3-40. For this purpose, the controller 3-50 may include at least one processor.

Meanwhile, embodiments of the present disclosure described in the present specification and illustrated in the accompanying drawings are only specific examples provided in order to easily describe technical contents of the present disclosure and assist in the understanding of the present disclosure, and are not to limit the scope of the present disclosure. That is, it will be obvious to those skilled in the art to which the present disclosure pertains that other modifications based on the technical idea of the present disclosure can be practiced. In addition, one or more of the above embodiments may be combined and operated as needed.

Meanwhile, although specific embodiments have been described in the detailed description of the present disclosure, various modifications are possible without departing from the scope of the present disclosure. Therefore, the scope of the present disclosure is not construed as being limited to the embodiments described above, but should be defined by the following claims as well as equivalents thereto.

In addition, the methods described in FIGS. 1A to 1H of the present disclosure may include methods in which at least one or more drawings are combined according to various implementations. For example, FIGS. 1A to 1H may be combined to be connected (executed) as one flow. The present disclosure may include methods in which at least one or more drawings are combined according to various implementations.

## Claims

1. A method performed by a terminal in a wireless communication system, comprising:
receiving, from a first base station supporting a first cell, a radio resource control (RRC) release message including sounding reference signal (SRS) transmission configuration information to be used in an RRC inactive state and a list of cells included in a validity area of the SRS transmission configuration information;
determining whether a second cell is included in the list of cells included in the validity area of the SRS transmission configuration information, in the RRC inactive state of the terminal that is based on the RRC release message; and
when the second cell is included in the list of cells included in the validity area of the SRS transmission configuration information, transmitting an SRS to the second cell based on the SRS transmission configuration information.

2. The method of claim 1, further comprising:
when the second cell is not included in the list of cells included in the validity area of the SRS transmission configuration information, instructing a lower layer to stop a time synchronization timer (inactivePosSRS-ValidityAreaTAT) of an SRS within the validity area during an inactive state.

3. The method of claim 1, wherein when the second cell is included in the list of cells included in the validity area of the SRS transmission configuration information, a preset timing advance (TA) value is reused.

4. The method of claim 1, further comprising:
determining whether a TA value is valid based on a time synchronization timer (inactivePosSRS-ValidityAreaTAT) of an SRS within the validity area during an inactive state and reception power threshold information (SRS inactivePosSRS-RSRP-ChangeThreshold) for validity area time synchronization,
wherein the RRC release message further includes at least one of the inactivePosSRS-ValidityAreaTAT or the SRS inactivePosSRS-RSRP-ChangeThreshold, and
the inactivePosSRS-ValidityAreaTAT includes any one value of 20480 ms or 40960 ms.

5. The method of claim 1, further comprising:
transmitting, to the first base station, terminal capability information on whether an SRS operation is supported within the validity area in the RRC inactive state.

6. A method performed by a first base station supporting a first cell in a wireless communication system, comprising:
generating, for a terminal, a radio resource control (RRC) release message including sounding reference signal (SRS) transmission configuration information to be used in an RRC inactive state and a list of cells included in a validity area of the SRS transmission configuration information; and
transmitting the RRC release message including the SRS transmission configuration information to be used in the RRC inactive state and the list of cells included in the validity area of the SRS transmission configuration information,
wherein, when a second cell is included in the list of cells included in the validity area of the SRS transmission configuration information, SRS transmission configuration to the second cell in the RRC inactive state based on the RRC release message is based on the SRS transmission configuration information.

7. The method of claim 6, wherein when the second cell is not included in the list of cells included in the validity area of the SRS transmission configuration information, a time synchronization timer (inactivePosSRS-ValidityAreaTAT) of an SRS within the validity area during an inactive state stops,
when the second cell is included in the list of cells included in the validity area of the SRS transmission configuration information, a preset timing advance (TA) value is reused,
the RRC release message further includes at least one of the time synchronization timer (inactivePosSRS-ValidityAreaTAT) of the SRS within the validity area during the inactive state, or reception power threshold information (SRS inactivePosSRS-RSRP-ChangeThreshold) for validity area time synchronization, and
the inactivePosSRS-ValidityAreaTAT includes any one value of 20480 ms or 40960 ms.

8. The method of claim 7, further comprising:
receiving, from the terminal, terminal capability information on whether an SRS operation is supported within the validity area in the RRC inactive state.

9. A terminal in a wireless communication system, comprising:
a transceiver transmitting and receiving a signal; and
a controller,
wherein the controller receives, from a first base station supporting a first cell, a radio resource control (RRC) release message including sounding reference signal (SRS) transmission configuration information to be used in an RRC inactive state and a list of cells included in a validity area of the SRS transmission configuration information,
in the RRC inactive state of the terminal that is based on the RRC release message, determines whether a second cell is included in the list of cells included in the validity area of the SRS transmission configuration information, and
when the second cell is included in the list of cells included in the validity area of the SRS transmission configuration information, transmits an SRS to the second cell based on the SRS transmission configuration information.

10. The terminal of claim 9, wherein when the second cell is not included in the list of cells included in the validity area of the SRS transmission configuration information, the controller instructs a lower layer to stop a time synchronization timer (inactivePosSRS-ValidityAreaTAT) of the SRS within the validity area during an inactive state, and
when the second cell is included in the list of cells included in the validity area of the SRS transmission configuration information, reuses a preset timing advance (TA) value.

11. The terminal of claim 9, wherein the controller determines whether a TA value is valid based on a time synchronization timer (inactivePosSRS-ValidityAreaTAT) of the SRS within the validity area during an inactive state and reception power threshold information (SRS inactivePosSRS-RSRP-ChangeThreshold) for validity area time synchronization,
the RRC release message further includes at least one of the inactivePosSRS-ValidityAreaTAT or the SRS inactivePosSRS-RSRP-ChangeThreshold, and
the inactivePosSRS-ValidityAreaTAT includes any one value of 20480 ms or 40960 ms.

12. The terminal of claim 9, wherein the controller transmits, to the first base station, terminal capability information on whether an SRS operation is supported within the validity area in the RRC inactive state.

13. A first base station supporting a first cell in a wireless communication system, comprising:
a transceiver transmitting and receiving a signal; and
a controller,
wherein the controller generates, for a terminal, a radio resource control (RRC) release message including sounding reference signal (SRS) transmission configuration information to be used in an RRC inactive state and a list of cells included in a validity area of the SRS transmission configuration information, and
transmits the RRC release message including the SRS transmission configuration information to be used in the RRC inactive state and the list of cells included in the validity area of the SRS transmission configuration information, and
when a second cell is included in the list of cells included in the validity area of the SRS transmission configuration information, SRS transmission configuration to the second cell in the RRC inactive state based on the RRC release message is based on the SRS transmission configuration information.

14. The first base station of claim 13, wherein when the second cell is not included in the list of cells included in the validity area of the SRS transmission configuration information, a time synchronization timer (inactivePosSRS-ValidityAreaTAT) of an SRS within the validity area during an inactive state stops,
when the second cell is included in the list of cells included in the validity area of the SRS transmission configuration information, a preset timing advance (TA) value is reused,
the RRC release message further includes at least one of the time synchronization timer (inactivePosSRS-ValidityAreaTAT) of the SRS within the validity area during the inactive state, or reception power threshold information (SRS inactivePosSRS-RSRP-ChangeThreshold) for validity area time synchronization, and
the inactivePosSRS-ValidityAreaTAT includes any one value of 20480 ms or 40960 ms.

15. The first base station of claim 13, wherein the controller receives, from the terminal, terminal capability information on whether an SRS operation is supported within the validity area in the RRC inactive state.
